(19) Europäisches Patentamt European Patent Office Office européen des brevets

(11) **EP 4 597 676 A1**

(12) **EUROPEAN PATENT APPLICATION**
published in accordance with Art. 153(4) EPC

(43) Date of publication:
**06.08.2025 Bulletin 2025/32**

(21) Application number: **23870519.8**

(22) Date of filing: **20.09.2023**

(51) International Patent Classification (IPC):
$H01M\ 10/058^{(2010.01)}$ $H01M\ 10/052^{(2010.01)}$
$H01M\ 4/13^{(2010.01)}$ $H01M\ 10/0566^{(2010.01)}$

(52) Cooperative Patent Classification (CPC):
Y02E 60/10

(86) International application number:
**PCT/CN2023/120003**

(87) International publication number:
**WO 2024/067287 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2022 CN 202211169618**

(71) Applicant: **BYD Company Limited**
**Shenzhen, Guangdong 518118 (CN)**

(72) Inventors:
• **ZHANG, Wei**
  **Shenzhen, Guangdong 518118 (CN)**
• **LI, Honghong**
  **Shenzhen, Guangdong 518118 (CN)**
• **JIN, Jing**
  **Shenzhen, Guangdong 518118 (CN)**
• **LEI, Yudong**
  **Shenzhen, Guangdong 518118 (CN)**

(74) Representative: **Mathys & Squire**
**The Shard**
**32 London Bridge Street**
**London SE1 9SG (GB)**

(54) **LITHIUM BATTERY AND ELECTRICAL DEVICE**

(57) A lithium battery and an electrical device. The lithium battery comprises a positive pole piece, a negative pole piece, and an electrolyte. The negative pole piece comprises a negative current collector and a negative active material layer arranged on the surface of the negative current collector. The negative active material layer comprises a negative active material. The single-sided surface density of the negative electrode active material layer is A mg/cm$^2$, the thickness of the negative electrode active material layer is D $\mu$m, the specific surface area of the negative electrode active material is S m$^2$/g, and the viscosity of the electrolyte at 25±2°C is $\delta$ mPa·s. The negative pole piece and the electrolyte satisfy the following relational expression: $1\leq(\delta\times A^2)/(D\times S)\leq15$.

FIG. 1

**Description**

**CROSS-REFERENCE TO RELATED APPLICATIONS**

The present disclosure claims priority to Chinese Patent Application No. 202211169618.1 filed on September 26, 2022 and entitled "LITHIUM BATTERY AND ELECTRICAL DEFICE", which is incorporated herein by reference in its entirety.

**FIELD**

The present disclosure relates to the technical field of lithium batteries, and specifically to a lithium battery and an electrical device.

**BACKGROUND**

With the development of lithium batteries, higher requirements have been raised for the performances of lithium batteries. Particularly, an increasingly higher requirement is raised for the energy density of the battery. The energy density of the battery is generally improved by increasing the compaction density of the negative electrode plate in the industry. However, this often leads to difficulty in complete infiltration of the negative electrode active material by the electrolyte solution, resulting in poor uniformity of the solid electrolyte interface (SEI) film, and eventually leading to an increase in negative electrode impedance, a decrease in dynamic performance, and even serious lithium plating on the negative electrode plate or abnormal occurrence of black spots/black areas. These problems cause accelerated decline of the capacity retention rate during the cycle process of the battery, and seriously affect the normal performance of the battery. Additionally, at low temperature, the migration rate of lithium ions slows down and the viscosity of the electrolyte solution increases. At this time, if the electrolyte solution cannot completely infiltrate the negative electrode active material, polarization of the battery will increase significantly during the low-temperature discharging process, resulting in significant deterioration of the low-temperature performance of the battery.

Although optimization has been made on the compaction density of the negative electrode plate, the selection of the particle size of the electrode active material, and the composition of the electrolyte solution, there is still no balance found between the above various factors, and improvement of battery performance is limited.

**SUMMARY**

In view of this, the present disclosure provides a lithium battery and an electrical device. By controlling the ratio factor between the parameters of the negative electrode plate and the parameters of the electrolyte solution of the lithium battery in a certain range, the battery is effectively ensured to have good normal-temperature cycle performance and good low-temperature performance.

In a first aspect, the present disclosure provides a lithium battery. The lithium battery includes a positive electrode plate, a negative electrode plate, and an electrolyte solution. The negative electrode plate includes a negative electrode current collector and a negative electrode active material layer arranged on a surface of the negative electrode current collector. The negative electrode active material layer includes a negative electrode active material. The single-sided surface density of the negative electrode active material layer is A $mg/cm^2$, the thickness of the negative electrode active material layer is D $\mu m$, the specific surface area of the negative electrode active material is S $m^2/g$, and the viscosity of the electrolyte solution at $25\pm2°C$ is $\delta$ mPa·s. The negative electrode plate and the electrolyte solution satisfy the following relational expression: $1\leq(\delta\times A^2)/(D\times S)\leq15$.

By controlling the value of the ratio factor of the single-sided surface density of the negative electrode active material layer, the thickness of the negative electrode active material layer, the specific surface area of the negative electrode active material, and the viscosity of the electrolyte solution in a certain range, the electrolyte solution can better infiltrate the negative electrode active material by virtue of a balanced relationship between various parameters, thus promoting the SEI film to grow more evenly on the surface of the negative electrode plate, and promoting the uniform distribution of active lithium ions in the negative electrode plate. As a result, the battery is enabled to have a high capacity retention rate during the normal-temperature cycle process, a low expansion rate during the normal-temperature cycle process, and a good low-temperature performance.

In some embodiments, A and D satisfy the following relational expression: $1.6 \leq (10A)/D \leq 1.9$ .

In some embodiments, A is in the range of: $6\leq A\leq15$.

In some embodiments, D is in the range of: $40\leq D\leq90$.

In some embodiments, S is in the range of: $0.5\leq S\leq5$.

In some embodiments, $\delta$ is in the range of: $3\leq\delta\leq5$.

In some embodiments, the electrolyte solution includes an organic solvent, a lithium salt, and an additive.

In some embodiments, the organic solvent includes at least one of a linear carbonate, a carboxylate, and a cyclic carbonate.

In some embodiments, the lithium salt includes at least one of lithium hexafluorophosphate, lithium tetrafluoroborate, lithium bis(fluorosulfonyl)imide, lithium bis(trifluoromethylsulfonyl)imide, lithium perchlorate, lithium difluoro(oxalato)borate, and lithium bis(oxalato)borate.

In some embodiments, the additive includes at least one of fluoroethylene carbonate, vinylene carbonate, 1,3-propanesultone, 1,3,6- hexanetricarbonitrile, glyceryl trinitrate, 1,2-bis(cyanoethoxy)ethane, 1,4-dicyano-2-butene, fumaronitrile, succinonitrile, adipodinitrile, lithium bis(oxalato)borate, and lithium difluoro(oxalato)borate.

In a second aspect, the present disclosure provides an electrical device. The electrical device includes a lithium battery according to the first aspect.

Due to the use of the lithium battery, the battery of the electrical device has a long battery life, a good cycle performance, and a high safety performance.

## BRIEF DESCRIPTION OF THE DRAWINGS

FIG. 1 is a schematic structural view of a lithium battery according to an embodiment of the present disclosure.

FIG. 2 is a schematic structural view of an electrical device according to an embodiment of the present disclosure.

List of reference numerals:

1-electrical device, 10-lithium battery, 110-positive electrode plate, 111-positive electrode current collector, 112-positive electrode active material layer, 120-negative electrode plate, 121-negative electrode current collector, 122-negative electrode active material layer, 130-electrolyte solution, 140-separator.

## DETAILED DESCRIPTION

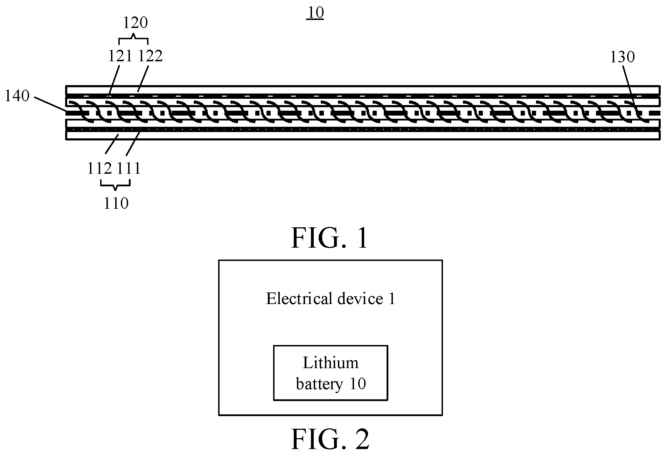

An embodiment of the present disclosure provides a lithium battery. As shown in FIG. 1, a lithium battery 10 includes a positive electrode plate 110, a negative electrode plate 120, and an electrolyte solution 130. The negative electrode plate 120 includes a negative electrode current collector 121 and a negative electrode active material layer 122 arranged on the surface of the negative electrode current collector 121. The negative electrode active material layer includes a negative electrode active material. The single-sided surface density of the negative electrode active material layer is A mg/cm$^2$, the thickness of the negative electrode active material layer is D $\mu$m, the specific surface area of the negative electrode active material is S m$^2$/g, and the viscosity of the electrolyte solution at $25\pm2$°C is $\delta$ mPa·s. The negative electrode plate and the electrolyte solution satisfy the following relational expression:

$$1 \leq \frac{\delta \times A^2}{D \times S} \leq 15 \qquad (1).$$

For convenience of description, $\dfrac{\delta \times A^2}{D \times S}$ (that is, $(\delta \times A^2)/(D \times S)$) is recorded as M, and M is the ratio factor of the viscosity of the electrolyte solution, the thickness of the negative electrode active material layer, the single-sided surface density of the negative electrode active material layer, and the specific surface area of the negative electrode active material. The surface density A of the negative electrode active material layer, the thickness D of the negative electrode active material layer, the specific surface area S of the negative electrode active material, and the viscosity $\delta$ of the electrolyte solution affect the electrochemical performance of the lithium ion battery. For example, the single-sided surface density A of the negative electrode active material layer and the thickness D of the negative electrode active material layer reflect the compaction density of the negative electrode active material layer. The increase of the compaction density adversely affects the infiltration by the electrolyte solution. When the specific surface area S of the negative electrode active material changes, capacity decline rate, impedance, and other features of the battery are affected. The viscosity of the electrolyte solution significantly affects the infiltrability of the electrolyte solution to the negative electrode plate. The regulation of any of the above parameters affects the performance of the battery, and the influence of each parameter on the performance of the battery is mutual, and difficult to be quantified. Therefore, the influence of various factors needs to be balanced. For example, the change in S of the negative electrode active material particle also affects the compaction density of the negative electrode active material. The parameters A and D may need to be adjusted and combined, and the viscosity δ of the electrolyte solution also needs to be adjusted to adjust the overall performance of the battery.

It can be seen that the influence of various parameters above on the battery performance is diverse, and difficult to be quantified. However, through a series of studies, the present applicant finds that by defining quantitative relation of the above parameters A, D, S, and δ, the ratio factor M (($δ×A^2$)/(D×S)) is defined. M can reflect the comprehensive influence of various factors in the negative electrode active material layer and the viscosity of the electrolyte solution on the cycle performance and the lithium plating of the battery. By controlling the value of M in the range of 1 to 15, the negative electrode plate is caused to have a high compaction density and can also be better infiltrated by the electrolyte solution, so that a stable and uniform SEI film can be formed at the interface of the negative electrode plate during the first charging and discharging process of the battery, and the active lithium ions can be promoted to be evenly distributed in the negative electrode plate and have a fast transport rate in the electrolyte solution. As a result, the capacity retention rate during the normal-temperature cycle process of the battery is improved, the expansion rate during the normal-temperature cycle process of the battery is reduced, the low-temperature performance of the battery is improved, and the lithium plating on the negative electrode is inhibited.

Generally, most negative electrode plates in a battery are arranged with a negative electrode active material layer on two opposite side surfaces of the negative electrode current collector. In the present disclosure, the thickness of the negative electrode active material layer being D μm means that the thickness of the negative electrode active material layer on a single side of the negative electrode current collector is D μm. Where the negative electrode plate has the negative electrode active material layer on the two opposite side surfaces, the ratio factor M between the negative electrode active material layers on two sides and the viscosity of the electrolyte solution is in the range of 1 to 15.

In some embodiments of the present disclosure, as shown in FIG. 1, the positive electrode plate 110 includes a positive electrode current collector 111 and a positive electrode active material layer 112 arranged on the surface of the positive electrode current collector 111. The positive electrode active material layer 112 includes a positive electrode active material.

In some embodiments of the present disclosure, A and D satisfy the following relational expression:

$$1.6 \leq \frac{10A}{D} \leq 1.9$$

(that is, $1.6 \leq (10A)/D \leq 1.9$). Exemplarily, the value of (10A)/D may be 1.6, 1.625, 1.65, 1.7, 1.725, 1.75, 1.8, 1.85, 1.875, or 1.9. In this case, the negative electrode active material layer is controlled to have a high compaction density, so that the lithium battery can achieve a high energy density. The value is substituted into M, the viscosity of the electrolyte solution and the specific surface area of the negative electrode active material can also be ensured to fall within a preferred range, thus ensuring good comprehensive performance of the battery. In the expression (10A)/D , "10" is the coefficient multiplied after unit conversion.

In some embodiments of the present disclosure, the thickness D μm of the negative electrode active material layer satisfies: 40≤D≤90. That is, the thickness of the negative electrode active material layer is in the range of 40 μm to 90 μm. By using the thickness of the negative electrode active material layer controlled in the above range, in combination with the single-sided surface density A, the compaction density of the negative electrode active material layer is controlled within a suitable range, so that the electrolyte solution can fully infiltrate the negative electrode active material and facilitate the transport of active lithium ions in the negative electrode plate. When M is in an appropriate range, the battery is ensured to have a good comprehensive performance. For example, the thickness of the negative electrode active material layer may be 40 μm, 41.5 μm, 42.5 μm, 45 μm, 47.5 μm, 50 μm, 52.5 μm, 55 μm, 56 μm, 57.5 μm, 60 μm, 62.5 μm, 65 μm, 67.5 μm, 70 μm, 72.5 μm, 75 μm, 77.5 μm, 80 μm, 82.5 μm, 85 μm, 87.5 μm, or 90 μm.

In some embodiments of the present disclosure, the single-sided surface density A mg/cm$^2$ of the negative electrode active material layer satisfies: 6≤A≤15. That is, the single-sided surface density of the negative electrode active material layer is in the range of 6 mg/cm$^2$ to 15 mg/cm$^2$. For example, the single-sided surface density of the negative electrode active material layer may be 6.1 mg/cm$^2$, 6.5 mg/cm$^2$, 7 mg/cm$^2$, 7.3 mg/cm$^2$, 7.5 mg/cm$^2$, 8 mg/cm$^2$, 8.1 mg/cm$^2$, 8.5 mg/cm$^2$, 9 mg/cm$^2$, 9.5 mg/cm$^2$, 9.6 mg/cm$^2$, 10 mg/cm$^2$, 10.5 mg/cm$^2$, 11 mg/cm$^2$, 11.5 mg/cm$^2$, 12 mg/cm$^2$, 12.5 mg/cm$^2$, 13 mg/cm$^2$, 13.5 mg/cm$^2$, 14 mg/cm$^2$, 14.5 mg/cm$^2$, or 15 mg/cm$^2$. Similarly, combining with the thickness D of the negative electrode active material layer, when the single-sided surface density A of the negative electrode active material is controlled in the above range, the negative electrode active material layer is controlled to have a high compaction density, and thus the battery has a good comprehensive performance.

In some embodiments of the present disclosure, the specific surface area S m$^2$/g of the negative electrode active material satisfies: 0.5≤S≤5. That is, the specific surface area of the negative electrode active material is in the range of 0.5 m$^2$/g to 5 m$^2$/g. For example, the specific surface area of the negative electrode active material may be 0.5 m$^2$/g, 0.6 m$^2$/g, 0.7 m$^2$/g, 0.8 m$^2$/g, 0.9 m$^2$/g, 1.0 m$^2$/g, 1.1 m$^2$/g, 1.2 m$^2$/g, 1.3 m$^2$/g, 1.4 m$^2$/g, 1.5 m$^2$/g, 1.6 m$^2$/g, 1.7 m$^2$/g, 1.8 m$^2$/g, 1.9 m$^2$/g, 2.0 m$^2$/g, 2.1 m$^2$/g, 2.2 m$^2$/g, 2.3 m$^2$/g, 2.4 m$^2$/g, 2.5 m$^2$/g, 3 m$^2$/g, 3.1 m$^2$/g, 3.2 m$^2$/g, 3.3 m$^2$/g, 3.4 m$^2$/g, 3.5 m$^2$/g, 3.6 m$^2$/g, 3.7 m$^2$/g, 3.8 m$^2$/g, 3.9 m$^2$/g, 4.0 m$^2$/g, 4.1 m$^2$/g, 4.2 m$^2$/g, 4.3 m$^2$/g, 4.4 m$^2$/g, 4.5 m$^2$/g, 4.6 m$^2$/g, 4.7 m$^2$/g, 4.8 m$^2$/g, 4.9 m$^2$/g, or 5.0 m$^2$/g. In some embodiments of the present disclosure, the specific surface area of the negative electrode active material can be determined by the BET method. For example, a sample tube is weighed on a 1/10,000 balance, and the weight of the empty sample tube is recorded. Then, about 1 g of sample was added into the sample tube and weighed on the 1/10,000 balance, the weight is recorded, and the weight of the sample is calculated. The sample tube containing the sample is degassed on a specific surface adsorption analyzer (e.g., BSD-PS), at 200°C for 120 min. The sample tube is removed and weighed, and the weight of the degassed sample is calculated. The sample tube containing the sample is then subjected to an adsorption and desorption test on the specific surface adsorption analyzer in a liquid-nitrogen cooling bath (the adsorbate is nitrogen), and the BET specific surface area of the sample is calculated by the BET multipoint method. It is to be understood that the above example is merely illustrative of the technical solution of the present disclosure, and does not constitute a restriction on the present disclosure. Relevant details of the determination method can be adjusted according to actual needs. In addition, the determination method of specific surface area is not limited in the present disclosure, and other feasible methods can be used for measurement in practice. When the negative electrode active material has a suitable specific surface area, the diffusion path of active lithium ions inside the negative electrode active material particle is controlled to be short, such that the impedance of the negative electrode is small. Moreover, the number of active sites on the surface of the negative electrode active material can also be controlled in a suitable range, so as to control the consumption rate of the electrolyte solution to fall within a suitable range, reduce the loss of active lithium ions during the cycle process of the battery, and further control the battery to have a high capacity retention rate and a good cycle performance. Additionally, the specific surface area of the negative electrode active material is controlled in an appropriate range, that is, the particle size of the negative electrode active material particle is controlled in an appropriate range. With respect to the preparation process of the negative electrode plate, an appropriate particle size can reduce the risk of the negative electrode active particles being crushed under excessive pressure during the rolling process of the negative electrode plate, and promote the formation of the negative electrode plate with a high compaction density.

In some embodiments of the present disclosure, the electrolyte solution includes a lithium salt, an organic solvent, and an additive. In some embodiments, the organic solvent includes, but is not limited to, at least one of a linear carbonate, a carboxylate, and a cyclic carbonate. The cyclic carbonate includes, but is not limited to, at least one of cyclic ethylene carbonate, cyclic propylene carbonate, cyclic haloethylene carbonate, and cyclic halopropylene carbonate. The linear carbonate includes, but is not limited to, at least one of dimethyl carbonate, ethyl methyl carbonate, diethyl carbonate, halogenated dimethyl carbonate, Halogenated ethyl methyl carbonate, and halogenated diethyl carbonate. The carboxylate includes, but is not limited to, at least one of ethyl formate, methyl acetate, ethyl acetate, propyl acetate, ethyl propionate, propyl propionate, butyl propionate, pentyl propionate, ethyl haloacetate, ethyl halopropionate, propyl halopropionate, butyl halopropionate, and amyl halopropionate.

The cyclic carbonate has a high viscosity, and can promote the dissociation of the lithium salt in the electrolyte solution, to ensure the good conductivity of the electrolyte solution. The linear carbonate and carboxylate are low-viscosity organic solvents, and their existence reduces the viscosity of the electrolyte solution as a whole, to ensure the good fluidity of the electrolyte solution and improve the infiltrability of the electrolyte solution. However, the oxidation resistance of low-viscosity organic solvents commonly used in the art is relatively insufficient. To avoid the gas generation caused by the decomposition of excessive low-viscosity organic solvents at high temperature, the amount of low-viscosity organic solvents needs to be controlled, to effectively reduce the risk of gas generation during the high-temperature storage or charging and discharging process. More importantly, the viscosity of the electrolyte solution can be controlled within a suitable range to make it have a good infiltrability. In some specific embodiments, the organic solvent includes at least one of a linear carbonate, a carboxylate and a cyclic carbonate. In this case, the electrolyte solution will have more preferred comprehensive performance.

In some embodiments of the present disclosure, the lithium salt in the electrolyte solution includes, but is not limited to, at least one of lithium hexafluorophosphate ($LiPF_6$), lithium tetrafluoroborate ($LiBF_4$), lithium bis(fluorosulfonyl) imide (LiFSI), lithium bis(trifluoromethylsulfonyl)imide (LiTFSI, molecular formula $LiN(SO_2CF_3)_2$), lithium perchlorate ($LiClO_4$), lithium difluoro(oxalato)borate (LiODFB), and lithium bis(oxalato)borate (LiBOB).

In some embodiments of the present disclosure, the additive in the electrolyte solution includes at least one of fluoroethylene carbonate, vinylene carbonate, 1,3-propanesultone, 1,3,6-hexanetricarbonitrile, glyceryl trinitrate, 1,2-bis(cyanoethoxy)ethane, 1,4-dicyano-2-butene, fumaronitrile, succinonitrile, adipodinitrile, lithium bis(oxalato)borate, and lithium difluoro(oxalato)borate. Among the additives, fluoroethylene carbonate, vinylene carbonate, and 1,3-propane sultone can be used as negative electrode film-forming additives, to promote the rapid formation of the SEI film on the surface of negative electrode plate. The nitrile substance can react with trace water to form an amide after the electrolyte solution is injected into the battery, reduce the risk of gas generation caused by decomposition of organic solvents in the electrolyte solution at high temperature, and complex with metal ions (for example, cobalt ions) that may be dissolved out from the positive electrode plate, to reduce the deposition of metal ions on the surface of the negative electrode plate. In the present disclosure, the types and amounts of the above additives are not limited, and choice can be made by those skilled in the art according to actual needs.

In some embodiments of the present disclosure, the viscosity $\delta$ mPa·s of the electrolyte solution at 25±2°C satisfies: $3 \leq \delta \leq 5$. That is, the viscosity of the electrolyte solution at 25±2°C is in the range of 3 mPa·s to 5 mPa·s. For example, the viscosity of the electrolyte solution at 25±2°C is 3 mPa·s, 3.1 mPa·s, 3.2 mPa·s, 3.3 mPa·s, 3.4 mPa·s, 3.5 mPa·s, 3.6 mPa·s, 3.7 mPa·s, 3.8 mPa·s, 3.9 mPa·s, 4.0 mPa·s, 4.1 mPa·s, 4.2 mPa·s, 4.3 mPa·s, 4.4 mPa·s, 4.5 mPa·s, 4.6 mPa·s, 4.7 mPa·s, 4.8 mPa·s, 4.9 mPa·s, or 5.0 mPa·s. From the perspective of fluidics, the electrolyte solution on the whole has a suitable viscosity, which is beneficial to the flow of the electrolyte solution in the negative electrode active material layer and promotes the full infiltration to the negative electrode active material, thus reducing the risk of lithium plating, reducing the impedance of the battery, and improving the low-temperature performance of the battery.

In an embodiment of the present disclosure, the negative electrode active material may include, but is not limited to, one or more of a carbon material, a silicon-based material, a tin-based material, and lithium titanate. The carbon material includes one or more of soft carbon, hard carbon, carbon fibers, graphitized carbon microspheres, artificial graphite, and natural graphite. The silicon-based material includes one or more of elemental silicon, a silicon alloy, a silicon oxide, a silicon-carbon composite material, and silicon carbide, etc. The tin-based material includes one or more of elemental tin, tin oxide, a tin-based alloy, and a tin-carbon compound, etc.

In an embodiment of the present disclosure, the negative electrode active material layer further includes a binder. In some cases, the negative electrode active material layer further includes a conductive agent. The binder may include, but is not limited to, one or more of polyvinylidene fluoride (PVDF), polytetrafluoroethylene (PTFE), polyvinyl alcohol (PVA), polyacrylonitrile (PAN), polyimide (PI), polyacrylic acid (PAA), polyacrylonitrile (PAN), polyacrylate (such as polymethyl methacrylate, polymethyl acrylate, and polyethyl acrylate, etc.), polyolefin (such as polypropylene, and polyethylene, etc.), styrene butadiene rubber (SBR), carboxymethylcellulose (CMC), sodium carboxymethylcellulose (CMC-Na), and sodium alginate. The first conductive agent and the second conductive agent may be one or more independently selected from conductive carbon black (such as acetylene black, ketjen black, Super P, and 350G carbon black, etc.), furnace black, carbon fibers, carbon nanotubes, and graphene, etc. However, the present disclosure is not limited thereto. The current collector (specifically, the negative electrode current collector) bearing the negative electrode active material may include, but is not limited to, a copper foil, a stainless steel foil, a copper alloy foil, a carbon-coated copper foil, or a copper-plated film, etc.

The negative electrode plate can be obtained by coating a negative electrode slurry containing the negative electrode active material, the binder and optional conductive agent on the current collector, drying, and rolling. The current collector may be coated on one side surface or on two side surfaces. In other words, maybe one side surface of the current collector has the negative electrode active material layer, or two opposite side surfaces of the negative electrode current collector have the negative electrode active material layer. When the negative electrode current collector is coated on two side surfaces, the ratio factor M between the negative electrode active material layers on two sides and the viscosity of the electrolyte solution is respectively in the above range.

In some embodiments of the present disclosure, as shown in FIG. 1, the lithium battery 10 also includes a separator 140 located between the positive electrode plate 110 and the negative electrode plate 120. The positive electrode active material in the positive electrode plate is a material where lithium ions can be reversibly deintercalated and intercalated. For the lithium battery, the positive electrode active material may include, but is not limited to, one or more of a lithium-unary oxide (such as lithium cobalt oxide, lithium nickel oxide, and lithium manganese oxide, etc.), a lithium-binary oxide (such as lithium nickel manganese oxide, lithium nickel cobalt oxide, and lithium cobalt manganese oxide, etc.), a lithium-ternary oxide (such as lithium nickel cobalt manganese oxide ternary material, or lithium nickel cobalt aluminum oxide ternary material), a lithium-multi-element oxide, and a lithium-containing phosphate (such as lithium iron phosphate, and lithium manganese iron phosphate). The separator can be made of any separator material in the existing battery. Exemplarily, the separator may include, but is not limited to, a polymer separator such as a single-layer polypropylene (PP) film, a single-layer polyethylene (PE) film, a two-layer PP/PE film, a two-layer PP/PP film, and a three-layer PP/PE/PP film, or nonwoven cloth.

An embodiment of the present disclosure further provides an electrical device. As shown in FIG. 2, an electrical device1 includes a lithium battery 10 according to the embodiment of the present disclosure.

In the present disclosure, there are no special restrictions on the electrical device using the lithium battery. For example, the electrical device includes, but is not limited to, a cell phone, a notebook computer, a tablet computer, a computer with stylus input, a portable fax machine, a portable copier, a portable printer, a transceiver, a video recorder, a camera, a television, a radio, a portable audio recorder, a portable CD player, a mini-disc, an electronic book player, an electronic diary, a wearable device (such as a smart watch, a smart bracelet, a headphone, and a bluetooth headset), a portable cleaner, a calculator, a memory card, a stand-by power source, a vehicle, a motorcycle, a bicycle (such as force-helping bicycle), a lighting appliance (such as flashlight), a toy, a game console, a clock, a power tool, a large household battery, and a lithiumion capacitor, etc.

Due to the use of the lithium battery, the battery of the electrical device has a long battery life, a good cycle performance, and a high safety performance.

The technical solution of the present disclosure is further explained in detail in several embodiments.

The lithium batteries of the examples and comparative examples in the present disclosure were prepared as follows.

(1) Preparation of electrolyte solution

In an argon-filled glove box with a water content of < 1 ppm and an oxygen content of < 1 ppm, a solution of $LiPF_6$ in an organic solvent was prepared and used as an electrolyte solution. The organic solvent was a mixture of ethylene carbonate (EC), propylene carbonate (PC), and diethyl carbonate (DEC). By adjusting the contents of PC and DEC to adjust the viscosity of the electrolyte solution, finally, the electrolyte solution needed in each example and comparative example was obtained. Fluoroethylene carbonate (FEC), a negative electrode film-forming additive, was also added to the electrolyte solution. The viscosity of each electrolyte solution was tested by a rheometer (Anton Paar MCR92) at 25°C. At a constant temperature of 25°C, the electrolyte solution was sheared by the instrument at a shear rate set to $0.1 \, s^{-1}$ to $300 \, s^{-1}$, to obtain viscosity curves at various shear rates. The viscosity data at a shear rate of $100 \pm 3 \, s^{-1}$ was read and used as the viscosity value of the electrolyte solution.

(2) Preparation of positive electrode plate

The positive electrode active material lithium cobalt oxide ($LiCoO_2$), the conductive agent carbon nanotubes (CNTs), and the binder polyvinylidene fluoride were mixed according to a weight ratio of 95:2:3, and then transferred to the solvent N-methylpyrrolidone (NMP), and fully stirred in a vacuum mixer, to obtain a positive electrode paste. The positive electrode slurry was evenly coated on a positive electrode current collector that was an aluminum foil, dried at 85°C, rolled, cut, and dried under vacuum at 85°C for 4 h, to obtain a positive electrode plate.

(3) Preparation of negative electrode plate

The negative electrode active material graphite with a specific surface area of a certain range, the binder styrene--butadiene rubber (SBR), and the binder sodium carboxymethyl cellulose (CMC) were added at a weight ratio of 95:2:3 to a proper amount of deionized water, mixed, and fully stirred to obtain a negative electrode slurry. The negative electrode slurry was evenly coated on a negative electrode current collector that was a copper foil, dried, rolled, and cut to obtain a negative electrode plate. Two opposite side surfaces of some negative electrode current collector have the negative electrode active material layer. In the same negative electrode plate, the single-sided surface density A $mg/cm^2$ of the negative electrode active material layer on the two opposite side surfaces and the thickness D $\mu m$ of the single-sided negative electrode active material layer are the same.

(4) Preparation of lithium battery

In a glove box, the prepared positive electrode plate, a separator (polyethylene film), and the negative electrode plate were stacked, wound, placed in an outer packaging foil, and dried to obtain a wound battery core. The separator is located between the positive electrode plate and the negative electrode plate for isolation therebetween. The negative electrode plate located at the head end or tail end of multiple alternately wound positive and negative electrode plates is a negative electrode plate with the negative electrode active material layer on one side, and the remaining negative electrode plates are negative electrode plate having the negative electrode active material layer on both opposite sides. The electrolyte solution prepared in Step (1) was injected into the dried battery precursor, followed by vacuum packaging, standing, formation, shaping and other procedures, to produce a lithium battery. The batteries in various examples were designated as S1 to S28; and the batteries in various comparative examples were designated as DS1 to DS4.

It is to be understood that the sequence of implementing operations involved in the preparation of the lithium battery is not limited in the present disclosure. For example, operations (1), (2), and (3) may be performed at the same time, or implemented in a sequence different from the sequence described herein.

The parameters of lithium batteries in various examples and comparative examples are summarized in Table 1.

The following performance tests were conducted on the batteries prepared in each example and comparative example. It should also be noted that, in the following performance tests, the comparative analysis is made under the condition that the ratio (N/P) of reversible surface capacity of the negative electrode to reversible surface capacity of the positive electrode of various batteries is the same.

(1) Normal-temperature cycle test

5 batteries from each example or comparative example were tested. The batteries were constant-current charged to 4.45 V at a rate of 1C at normal temperature (25±3°C), then constant-voltage charged to 0.05C at 4.45 V, allowed to stand for 5 min, then constant-current discharged to 3.0 V at a rate of 1C, and allowed to stand for 5 min. This was one cycle. The capacity retention rate and expansion rate (1000th full-charge thickness/first full-charge thickness) after 1000 normal-temperature cycles of each battery were recorded. The average capacity retention rate and expansion rate after 1000 normal-temperature cycles of each group of batteries were calculated. The results are summarized in Table 2 below. The test result of batteries failed to have 1000 cycles is recorded as "NG". The normal-temperature expansion rate of batteries failed to have 1000 cycles is the expansion rate of the batteries after the last cycle.

(2) Lithium plating test after 20 cycles at 0°C

3 batteries from each example or comparative example were tested. After standing at 0°C for 2 h, the battery was constant-current charged to 4.45 V at a rate of 0.5 C, then constant-voltage charged to 0.05C at 4.45 V, allowed to stand for 5 min, then constant-current discharged to 3.0 V at a rate of 1C, and, allowed to stand for 5 min. This was one cycle. After 20 cycles, the battery was fully charged according to the above conditions, and then disassembled in a glove box under an inert atmosphere. The lithium plating on the surface of the negative electrode plate was recorded. The results of lithium plating in each group of batteries are summarized in Table 2 below.

(3) Discharging capacity retention rate test of batteries at -20°C

3 batteries from each example or comparative example were tested. The batteries were constant-current charged to 4.45 V at a rate of 0.2C at normal temperature (25±3°C), and then constant-voltage charged to a current of 0.05C at 4.45 V, allowed to stand for 5 min, then constant-current discharged to 3.0 V at a rate of 0.2C, and, allowed to stand for 5 min. The discharging capacity at 0.2 C and normal temperature was recorded as the initial capacity of the battery. Then the battery was constant-current charged to 4.45 V at a rate of 0.2C, then constant-voltage charged to 0.05C at 4.45 V, and allowed to stand for 5 min. Then, the battery was constant-current discharged to 3.0 V at a rate of 0.2C after standing at -20°C for 2 h. The discharging capacity of the battery at 0.2C and -20 °C was recorded.

Discharging capacity of battery at -20°C = (discharging capacity at 0.2C and -20 °C/initial capacity of battery) x 100%. The average discharging capacity retention rate of each group of batteries at -20 °C was calculated. The results are summarized in Table 2 below.

Table 1. Summary of parameters of batteries in various examples and comparative examples

| Battery No. | Single-sided surface density A of negative electrode active material layer (mg/cm$^2$) | D ($\mu$m) | S (m$^2$/g) | $\delta$ (mPa·s) | 10A/D | $M\left(\dfrac{\delta \times A^2}{D \times S}\right)$ |
|---|---|---|---|---|---|---|
| S1 | 9.0 | 47.5 | 1.5 | 4.0 | 1.89 | 4.5 |
| S2 | 9.0 | 50 | 1.5 | 4.0 | 1.80 | 4.3 |
| S3 | 9.0 | 52.5 | 1.5 | 4.0 | 1.71 | 4.1 |
| S4 | 6.5 | 40 | 1.5 | 4.0 | 1.625 | 2.8 |
| S5 | 12.0 | 75 | 1.5 | 4.0 | 1.60 | 5.1 |
| S6 | 15.0 | 80 | 1.5 | 4.0 | 1.875 | 7.5 |
| S7 | 15.0. | 90 | 1.5 | 4.0 | 1.67 | 6.7 |
| S8 | 16.0 | 90 | 1.5 | 4.0 | 1.78 | 7.6 |
| S9 | 6.5 | 35 | 1.5 | 4.0 | 1.86 | 3.2 |
| S10 | 8.5 | 50 | 1.5 | 4.0 | 1.70 | 3.9 |
| S11 | 9.5 | 50 | 1.5 | 4.0. | 1.90 | 4.8 |
| S12 | 8.5 | 50 | 0.5 | 4.0 | 1.70 | 11.6 |
| S13 | 8.5 | 50 | 1.0 | 4.0 | 1.70 | 5.8 |
| S14 | 8.5 | 50 | 2.0 | 4.0 | 1.70 | 2.9 |
| S15 | 8.5 | 50 | 2.5 | 4.0 | 1.70 | 2.3 |
| S16 | 8.5 | 50 | 3.5 | 4.0 | 1.70 | 1.7 |
| S17 | 8.5 | 50 | 5.0 | 4.0 | 1.70 | 1.2 |
| S18 | 8.5 | 50 | 0.4 | 4.0 | 1.70 | 14.5 |
| S19 | 8.5 | 50 | 6.0 | 4.0 | 1.70 | 1.0 |

(continued)

| Battery No. | Single-sided surface density A of negative electrode active material layer (mg/cm²) | D (μm) | S (m²/g) | δ (mPa·s) | 10A/D | $M\left(\dfrac{\delta \times A^2}{D \times S}\right)$ |
|---|---|---|---|---|---|---|
| S20 | 9.0 | 50 | 0.5 | 4.6 | 1.80 | 14.9 |
| S21 | 8.5 | 50 | 1.5 | 3.0 | 1.70 | 2.9 |
| S22 | 8.5 | 50 | 1.5 | 3.6 | 1.70 | 3.5 |
| S23 | 8.5 | 50 | 1.5 | 4.5 | 1.70 | 4.3 |
| S24 | 8.5 | 50 | 1.5 | 5.1 | 1.70 | 4.9 |
| S25 | 8.5 | 50 | 1.5 | 5.0 | 1.70 | 4.8 |
| S26 | 8.5 | 50 | 1.5 | 4.0 | 1.70 | 3.9 |
| S27 | 8.5 | 50 | 1.5 | 3.0 | 1.70 | 2.9 |
| S28 | 8.5 | 50 | 1.5 | 2.5 | 1.70 | 2.4 |
| DS1 | 14.0 | 70 | 0.5 | 5.1 | 2.00 | 28.6 |
| DS2 | 14.0 | 75 | 0.5 | 5.1 | 1.87 | 26.7 |
| DS3 | 14.0 | 75 | 0.5 | 4.5 | 1.87 | 23.5 |
| DS4 | 8.0 | 45 | 5.0 | 3.0 | 1.78 | 0.9 |

Table 2. Summary of performance test results of batteries in examples and comparative Examples

| Battery No. | Capacity retention rate after 1000 cycles at normal temperature | Expansion rate after 1000 cycles at normal temperature | Lithium plating on negative electrode plate after 20 cycles at 0°C | Discharging capacity retention rate at -20°C/0.2C |
|---|---|---|---|---|
| S1 | 86.40% | 10.60% | No lithium plating | 68.60% |
| S2 | 86.90% | 9.80% | No lithium plating | 71.00% |
| S3 | 87.00% | 9.40% | No lithium plating | 73.60% |
| S4 | 88.30% | 8.70% | No lithium plating | 75.80% |
| S5 | 87.20% | 8.80% | No lithium plating | 72.90% |
| S6 | 83.50% | 11.20% | Very slight lithium plating | 67.80% |
| S7 | 86.90% | 9.10% | No lithium plating | 71.80% |
| S8 | 82.60% | 10.40% | Very slight lithium plating | 68.00% |
| S9 | 82.90% | 10.70% | No lithium plating | 70.80% |
| S10 | 87.60% | 8.70% | No lithium plating | 73.40% |
| S11 | 81.40% | 14.40% | Very slight lithium plating | 70.00% |
| S12 | 82.40% | 11.20% | Very slight lithium plating | 65.10% |
| S13 | 87.50% | 8.80% | No lithium plating | 73.20% |
| S14 | 87.70% | 9.00% | No lithium plating | 74.30% |
| S15 | 87.60% | 9.30% | No lithium plating | 75.60% |
| S16 | 87.00% | 9.80% | No lithium plating | 76.10% |
| S17 | 86.40% | 11.80% | No lithium plating | 76.30% |
| S18 | 80.60% | 12.80% | Slight lithium plating | 63.80% |
| S19 | 85.50% | 12.40% | No lithium plating | 76.40% |
| S20 | 82.00% | 11.80% | Very slight lithium plating | 64.60% |
| S21 | 84.50% | 9.00% | No lithium plating | 77.60% |

(continued)

| Battery No. | Capacity retention rate after 1000 cycles at normal temperature | Expansion rate after 1000 cycles at normal temperature | Lithium plating on negative electrode plate after 20 cycles at 0°C | Discharging capacity retention rate at -20°C/0.2C |
|---|---|---|---|---|
| S22 | 86.40% | 8.90% | No lithium plating | 75.00% |
| S23 | 89.00% | 8.60% | No lithium plating | 70.10% |
| S24 | 83.10% | 10.80% | Slight lithium plating | 65.40% |
| S25 | 83.40% | 10.50% | Very slight lithium plating | 67.00% |
| S26 | 86.90% | 9.10% | No lithium plating | 73.80% |
| S27 | 87.00% | 9.70% | No lithium plating | 74.60% |
| S28 | 84.20% | 12.00% | No lithium plating | 74.80% |
| DS1 | NG | 30.80% | Serious lithium plating | 56.40% |
| DS2 | NG | 28.60% | Serious lithium plating | 56.70% |
| DS3 | NG | 24.80% | Serious lithium plating | 58.00% |
| DS4 | 65.60% | 19.80% | Serious lithium plating | 70.50% |

From the battery parameters in Table 1 and the battery performances in Table 2, it can be known that when the value of the ratio factor M between the composition of the negative electrode plate in the lithium battery and the viscosity $\delta$ of the electrolyte solution is in the range of 1 to 15, the lithium battery has good normal-temperature cycle performance, high capacity retention rate, and low battery thickness expansion rate. Moreover, the low temperature performance of the battery is also good. Because of the edge effect of the negative electrode plate, slight lithium plating on the negative electrode plate after 20 cycles at 0°C is acceptable, which will not significantly affect the low-temperature performance of the battery. However, when the M value of the battery is higher or lower than the limit given in the present disclosure (Comparative Batteries DS1 to DS4), the expansion rate of the battery during normal temperature cycle is very high, the safety performance is less good, even DS1 to DS3 cannot pass the test of 1000 normal-temperature cycles, and the batteries in the comparative examples have serious lithium plating after 20 low-temperature cycles, which fully shows that the batteries in the comparative examples do not have the ability of long-term stable operation at normal temperature and low temperature.

Additionally, it can be found with the batteries S8 and S7 in the examples that when other parameters remain unchanged, if the single-sided surface density A of the negative electrode active material is in a preferred range of 6 mg/cm$^2$ to 15 mg/cm$^2$, the cycle performance of the battery (S7) is better than that of the battery (S8) in the example where the single-sided surface density is not in the preferred range. Similarly, the comparison of batteries S9 and S4 in the examples shows that when other parameters remain unchanged, the thickness D of the negative electrode active material layer of S4 is in a preferred range of 40 $\mu$m to 90 $\mu$m, and the A value of the battery S4 is smaller than the A value of S9, which promotes the normal-temperature cycle performance and low-temperature discharging capacity retention rate of the battery. As can be seen from S18 to S19 and S12 to S17 in the examples, when other parameters remain unchanged, If the specific surface area S of the negative electrode active material particle is in a preferred range of 0.5 m$^2$/g to 5 m$^2$/g, the comprehensive performance of the battery is more excellent. Particularly the expansion rate of the battery S12 to S17 is relatively low after 1000 cycles at normal temperature.

In addition, comparison of the batteries S24 and S28 with the batteries S21 to S23 and S25- to S27 in the examples shows that when other parameters remain unchanged, if the viscosity of the electrolyte solution in the battery of the example is in a preferred range of 3 mPa·s to 5 mPa·s, the comprehensive performance of the battery is good. Particularly the expansion rate of the batteries S21 to S23 and S25 to S27 is relatively low after 1000 cycles at normal temperature, the risk of lithium plating of the battery is low, and the low-temperature performance can be maintained at a high level.

Regardless of whether the above parameters A, D, S, and $\delta$ are within the preferred ranges in the present disclosure, if the ratio factor M of various parameters is in the range of 1 to 15 defined in the present disclosure, the battery performance is obviously superior to that of the batteries DS1 to DS4 in the comparative examples where the value of M (($\delta \times A^2)/(D \times S)$) is not within the range of 1 to 15.

Exemplary embodiments of the present disclosure have been described above. It should be noted that several improvements and modifications can be made by those of ordinary skill in the art without departing from the principle of the present disclosure, which shall fall within the protection scope of the present disclosure.

**Claims**

1. A lithium battery (10), the lithium battery comprising a positive electrode plate (110), a negative electrode plate (120), and an electrolyte solution (130), the negative electrode plate comprising a negative electrode current collector (121) and a negative electrode active material layer (122) arranged on the surface of the negative electrode current collector, and the negative electrode active material layer comprising a negative electrode active material, wherein the single-sided surface density of the negative electrode active material layer is A mg/cm$^2$, the thickness of the negative electrode active material layer is D $\mu$m, the specific surface area of the negative electrode active material is S m$^2$/g, and the viscosity of the electrolyte solution at 25$\pm$2°C is $\delta$ mPa·s; and the negative electrode plate and the electrolyte solution satisfy the following relational expression: $1 \leq (\delta \times A^2)/(D \times S) \leq 15$.

2. The lithium battery according to claim 1, wherein A and D satisfy the following relational expression: $1.6 \leq (10A)/D \leq 1.9$.

3. The lithium battery according to claim 1, wherein A is in the range of: $6 \leq A \leq 15$.

4. The lithium battery according to claim 1, wherein D is in the range of: $40 \leq D \leq 90$.

5. The lithium battery according to any one of claims 1 to 4, wherein S is in the range of: $0.5 \leq S \leq 5$.

6. The lithium battery according to any one of claims 1 to 5, wherein $\delta$ is in the range of: $3 \leq \delta \leq 5$.

7. The lithium battery according to any one of claims 1 to 6, wherein the electrolyte solution comprises an organic solvent, a lithium salt, and an additive.

8. The lithium battery according to claim 7, wherein the organic solvent comprises at least one of a linear carbonate, a carboxylate, and a cyclic carbonate.

9. The lithium battery according to claim 7, wherein the lithium salt comprises at least one of lithium hexafluorophosphate, lithium tetrafluoroborate, lithium bis(fluorosulfonyl)imide, lithium bis(trifluoromethylsulfonyl)imide, lithium perchlorate, lithium difluoro(oxalato)borate, and lithium bis(oxalato)borate.

10. The lithium battery according to claim 7, wherein the additive comprises at least one of fluoroethylene carbonate, vinylene carbonate, 1,3-propanesultone, 1,3,6-hexanetricarbonitrile, glyceryl trinitrate, 1,2-bis(cyanoethoxy)ethane, 1,4-dicyano-2-butene, fumaronitrile, succinonitrile, adipodinitrile, lithium bis(oxalato)borate, and lithium difluoro(oxalato)borate.

11. An electrical device (1), the electrical device comprising a lithium battery (10) according to any one of claims 1 to 10.

FIG. 1

FIG. 2

## INTERNATIONAL SEARCH REPORT

| International application No. |
|---|
| **PCT/CN2023/120003** |

**A.    CLASSIFICATION OF SUBJECT MATTER**

H01M10/058(2010.01)i;  H01M10/052(2010.01)i;  H01M4/13(2010.01)i;  H01M10/0566(2010.01)i

According to International Patent Classification (IPC) or to both national classification and IPC

**B.    FIELDS SEARCHED**

Minimum documentation searched (classification system followed by classification symbols)

CPC:  H01M

Documentation searched other than minimum documentation to the extent that such documents are included in the fields searched

Electronic data base consulted during the international search (name of data base and, where practicable, search terms used)

CNTXT, CNABS, CNKI, VCN, ENTXTC, ISI WEB OF SCIENCE: 锂电池, 锂离子, 电池, 正极, 负极, 电解液, 电解质, 负极集流体, 活性材料, 活性物质, 密度, 厚度, 比表面积, 粘度, lithium, battery, positive electrode, negative electrode, electrolyte solution, active material, density, viscotity

**C.    DOCUMENTS CONSIDERED TO BE RELEVANT**

| Category* | Citation of document, with indication, where appropriate, of the relevant passages | Relevant to claim No. |
|---|---|---|
| A | CN 114937807 A (JIANGSU ZENERGY BATTERY TECHNOLOGIES CO., LTD.) 23 August 2022 (2022-08-23)<br>claims 1-4 and 10 | 1-11 |
| A | CN 115064770 A (SHENZHEN CAPCHEM TECHNOLOGY CO., LTD.) 16 September 2022 (2022-09-16)<br>claim 1 | 1-11 |
| A | CN 114695943 A (SHENZHEN CAPCHEM TECHNOLOGY CO., LTD.) 01 July 2022 (2022-07-01)<br>claims 1 and 3 | 1-11 |
| A | CN 109119686 A (NINGDE CONTEMPORARY AMPEREX TECHNOLOGY CO., LTD.) 01 January 2019 (2019-01-01)<br>claims 1-10 | 1-11 |
| A | CN 110739485 A (DONGGUAN VEKEN BATTERY CO., LTD.) 31 January 2020 (2020-01-31)<br>claims 1-10 | 1-11 |

☑ Further documents are listed in the continuation of Box C.       ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **01 November 2023** | **06 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/120003** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2020243898 A1 (LG CHEMICAL LTD.) 30 July 2020 (2020-07-30) <br> claims 1-10 | 1-11 |
| A | KR 20140116720 A (LG CHEMICAL LTD.) 06 October 2014 (2014-10-06) <br> claims 1-10, and abstract | 1-11 |
| PX | CN 115275367 A (BYD CO., LTD.) 01 November 2022 (2022-11-01) <br> claims 1-10, and description, paragraph [0020] | 1-11 |

Form PCT/ISA/210 (second sheet) (July 2022)

## INTERNATIONAL SEARCH REPORT
### Information on patent family members

| International application No. |
| --- |
| **PCT/CN2023/120003** |

| Patent document cited in search report | | | Publication date (day/month/year) | Patent family member(s) | | | Publication date (day/month/year) |
| --- | --- | --- | --- | --- | --- | --- | --- |
| CN | 114937807 | A | 23 August 2022 | None | | | |
| CN | 115064770 | A | 16 September 2022 | None | | | |
| CN | 114695943 | A | 01 July 2022 | None | | | |
| CN | 109119686 | A | 01 January 2019 | US | 2020020980 | A1 | 16 January 2020 |
| | | | | WO | 2018232979 | A1 | 27 December 2018 |
| | | | | EP | 3447838 | A1 | 27 February 2019 |
| | | | | EP | 3447838 | A4 | 10 April 2019 |
| | | | | EP | 3447838 | B1 | 11 November 2020 |
| CN | 110739485 | A | 31 January 2020 | None | | | |
| US | 2020243898 | A1 | 30 July 2020 | US | 11329313 | B2 | 10 May 2022 |
| | | | | PL | 3651256 | T3 | 20 June 2022 |
| | | | | WO | 2019151725 | A1 | 08 August 2019 |
| KR | 20140116720 | A | 06 October 2014 | KR | 101605935 | B1 | 23 March 2016 |
| CN | 115275367 | A | 01 November 2022 | None | | | |

Form PCT/ISA/210 (patent family annex) (July 2022)

**EP 4 597 676 A1**

**Patent documents cited in the description**

- CN 202211169618